# EUROPÄISCHE PATENTANMELDUNG

(11) **EP 0 632 081 A2**
(43) Veröffentlichungstag der Anmeldung: **04.01.1995**
(21) Anmeldenummer: 94109479.9
(22) Anmeldetag: 20.06.1994
(51) Int. Cl.: C08G 63/08

(54) **Polylactid mit Langkettenverzweigungen**

(30) Priorität: 26.06.1993 DE 4321355
(71) Anmelder: BASF Aktiengesellschaft, D-67063 Ludwigshafen (DE)
(72) Erfinder: Sterzel, Hans-Josef, Dr., D-67125 Dannstadt-Schauernheim (DE); Laun, Martin, Dr., D-67061 Ludwigshafen (DE)

(57) **Zusammenfassung**

Polylactidhomo- oder -copolymeres, enthaltend Langkettenverzweigungen.

## Beschreibung

Polylactid wird durch ringöffnende Polymerisation von Lactid hergestellt, wobei die Konfiguration erhalten bleibt. Poly-L- und Poly-D-lactid können unter entsprechenden Verarbeitungsbedingungen, speziell durch kurzes Halten im Temperaturbereich von 100 bis 120°C, als teilkristalline Polymere mit einer Glas(übergangs-)temperatur von 50 bis 55°C und einem Kristallitschmelzpunkt von etwa 175°C erhalten werden. Durch Zumischen von DL- oder DD-Lactid zu L-Lactid bzw. von DL- oder LL-Lactid zu D-Lactid werden Copolymere mit erniedrigter Kristallisationsgeschwindigkeit und erniedrigtem kristallinem Anteil erhalten: Der Schmelzpunkt sinkt ab, die Glastemperatur bleibt jedoch erhalten. Möchte man jedoch die Glastemperatur absenken, so führt man eine Copolymerisation mit dem cyclischen Glykolid durch. Das homopolymere Polyglykolid weist eine Glastemperatur von 20 bis 25°C auf. Durch Copolymerisation entsprechender Anteile von Lactid und Glykolid läßt sich demnach eine Glastemperatur zwischen etwa 20 und 55°C einstellen.

Die Glastemperatur von Polylactid spielt eine besondere Rolle bei der Kompostierung des Polymeren und bei seiner Resorption in Körpergewebe. Der Abbau des Materials erfolgt nämlich im ersten Schritt durch eine unspezifische Hydrolyse der Polyesterketten. Im zweiten Schritt wird die gebildete Milchsäure durch Mikroorganismen bzw. enzymatisch abgebaut. Geschwindigkeitsbestimmend ist die unspezifische Esterhydrolyse, die von der Glastemperatur des Polymeren abhängt: Sie verläuft 5 bis 10 K oberhalb der Glastemperatur um einen Faktor von ca. 100 schneller als 5 bis 10 K unterhalb der Glastemperatur.

Damit läßt sich die Abbaugeschwindigkeit über die Festlegung der Glastemperatur verändern: Je nachdem ob z.B. eine schnelle oder langsame Resorbierbarkeit im lebenden menschlichen Gewebe gefordert wird, setzt man Copolymere aus Lactid und Glykolid mit einer Glastemperatur unterhalb bzw. oberhalb 37oC ein.

Polylactid, speziell homopolymeres Polylactid gewinnt auch zunehmend Interesse als verrottbares Verpackungsmaterial. Dabei ist es wesentlich, daß die Temperatur in Schnellkompostierungsanlagen i.a. für längere Zeit oberhalb 50°C liegt.

Zur Herstellung der verschiedensten Formkörper oder Verpackungsmittel wie Folien, Flaschen, Tiefziehbecher oder Spritzgußartikeln ist es notwendig, die festen Polymeren aufzuschmelzen und die Schmelze durch Düsen in Formen zu pressen oder Filme zu erzeugen. Dazu muß die Schmelze einerseits möglichst gut fließfähig sein. Nach einem nicht vorveröffentlichten Vorschlag kann durch Verstrecken beim Erstarren die Kristallisation gefördert und so eine Steifigkeit von über 3000 N/mm² erreicht werden.

Andererseits soll die Masse im Verarbeitungsbereich zwischen Glastemperatur und Kristallitschmelzpunkt eine möglichst hohe Schmelzesteifigkeit besitzen und die Schmelzesteifigkeit soll möglichst wenig von Temperaturänderungen abhängen. Dies ist wichtig, weil während der Orientierung und Kristallisation, die nicht mehr als einige Zehntelsekunden bis einige Sekunden dauern, die freiwerdende Wärme nur schlecht abgeführt werden kann. Erfahrungsgemäß erwärmt sich das Material um bis zu 35°C. Dies hat z.B. zur Folge, daß beim sog. Streckblasverfahren eine ungleichmäßige Verformung auftritt.

Ein gleichmäßiges Aufblasen setzt also eine geringe Abhängigkeit der Schmelzesteifigkeit von der Temperatur voraus. Andernfalls würde an einer Stelle mit lokal erhöhter Verstreckung der Temperaturanstieg ein rasches Abfallen der Schmelzesteifigkeit bewirken und damit ein Überstrecken an dieser Stelle.

Die bekannten Polylactid-Formmassen bereiten wegen ihrer zu geringen Schmelzesteifigkeit bei der Verarbeitung Schwierigkeiten.

An sich kann die Schmelzesteifigkeit durch die Molgewichtsverteilung beeinflußt werden; dazu ist folgendes vorauszuschicken:
Polyglykolid und Polylactid werden durch ringöffnende Massepolymerisation unter Initiierung mit Metalloxiden oder Metallcarboxylaten erhalten.

Die absolute Konfiguration bleibt bei der Polymerisation erhalten, d.h. bei der Polymerisation z.B. von L-Lactid entsteht reines Poly-L-lactid. Statistische Copolymerisate entstehen aus Mischungen der Lactidstereoisomeren und/oder mit Glykolid. Die Polymerisationstemperatur soll bei der Initiierung mit z.B. Zinn-II-octoat über dem Schmelzpunkt des Polymeren liegen und beträgt je nach Zusammensetzung 150 bis 240°C.

Die Molmassenverteilung wird allerdings durch Umesterungsreaktionen während der Polymerisation verbreitert. So, beschreibt die US-PS 4 719 246 die Umesterung zwischen zwei Polylactiden, die aus verschiedenen Enantiomeren bestehen. Nach mehrmaligem Aufheizen und Abkühlen während 10 bis 60 min wird eine statistische Verteilung von Kettenelementen in den vorher getrennten Polymeren beobachtet. Lactid-Glykolid-Copolymere werden nach der US-PS erst durch Umesterung bei 220°C über 2 h erhalten. Da die Polymerisation jedoch nach 30 bis 60 min Gesamtverweilzeit abgeschlossen ist, kann man die Umesterung zu einer Gleichgewichtsverteilung nicht vollkommen abwarten.

Es besteht daher die Aufgabe, Lactidpolymere mit einem im vorstehenden Sinne günstigen Verarbeitungverhalten zu erzeugen.

Die erfindungsgemäße Aufgabe wird dadurch gelöst, daß man Polylactid herstellt, welches einen gewissen Anteil an Langkettenverzweigungen aufweist. Das heißt, daß ein entsprechender Anteil an Kettenmolekülen Verzweigungsstellen aufweist. Die Einführung von Langkettenverzweigungen gleicht erfindungsgemäß die beschriebenen Nachteile des Standes der Technik mehr als aus. Es hat sich als günstig erwiesen, wenn der Anteil verzweigter Moleküle 0,01 bis 1,5 mol.-% beträgt, vorteilhaft 0,1 bis 0,3 mol.-%.

Verzweigungen werden erhalten, indem den polymerisationsfähigen ringförmigen Monomeren im Sinne der Polymerisation bi- oder höherfunktionelle Monomere des Typs 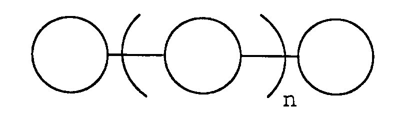
zumischt, wobei aus Gründen der Zugänglichkeit und der Notwendigkeit, Vernetzungen möglichst zu vermeiden, bifunktionelle Monomere des Typs 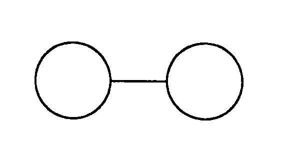
bevorzugt werden.

Die vorstehend als Kreise angedeuteten ringförmigen Molekülstrukturen entsprechen dem der ringöffnenden Polymerisation zugänglichen Ring oder Rest, z.B. also des Lactids, 1,3-Dioxan-2-ons oder Lactons.

Im einzelnen handelt es sich hierbei um Di-1,3-Dioxan-2-one der Struktur, 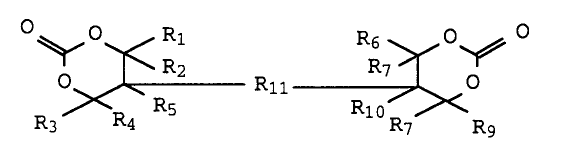
Di-1,4-Dioxan-2-one der Struktur 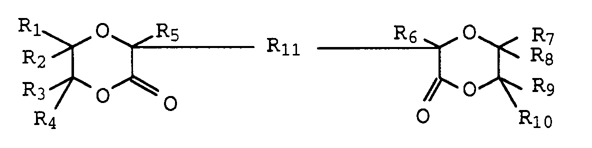
Lactide der Struktur 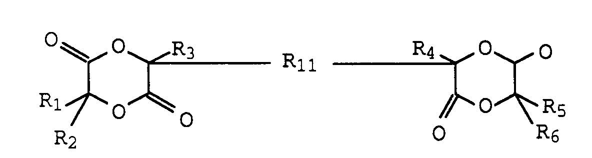
oder Lactone der Struktur 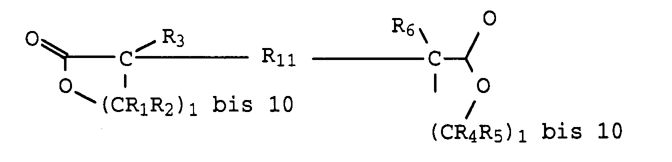
sowie weitere im Sinne der Lactid-Polymerisation potentiell bifunktionelle Ringverbindungen.

Im den angeführten Strukturformeln können die Reste R₁ bis R₁₀ gleich oder verschieden sein und Wasserstoff, eine verzweigte oder unverzweigte Alkyl-, Alkylen- oder Alkylingruppe mit 1 bis 12, bevorzugt 1 bis 4 Kohlenstoffatomen enthalten, die gegebenenfalls durch Halogen, Hydroxy, Alkoxy, Formyl, Acyl, Amino, Alkylamino, Dialkylamino oder Cycloalkyl substituiert sind.

Der die polymerisierbaren Ringe verbindende Rest R₁₁ kann unverzweigtes oder verzweigtes Alkylen oder Cycloalkylen bedeuten, wobei der Abstand zwischen den beiden Ringen mindestens dem entspricht, 2, vorzugsweise 4 bis 10 linear angeordnete Kohlenstoffatome aufbauen.

Die verzweigenden Monomeren werden den monofunktionellen Monomeren zugemischt und die Polymerisation in der üblichen Weise durchgeführt. Der Anteil an verzweigenden Monomeren kann z.B. 0,01 bis 1,5 mol.-% betragen.

Sie können nach den üblichen Syntheseprinzipien der organischen Chemie erhalten werden, die sich dem Fachmann ohne weiteres aus dem Formelbild erschließen.

### Vergleichsversuch mit unverzweigtem Polylactid

1,4 kg L-Lactid (100 Mol) werden unter Argon in einem Rührkessel bei 120°C aufgeschmolzen und danach mit 0,01 Mol Zinn-(II)-Ethylhexansäuresalz als Initiator, gelöst in Toluol, versetzt. Das Monomere wird weiter aufgeheizt und bei 190°C 60 min lang polymerisiert. Die Schmelze wird durch eine Düse am Boden des Rührkessels gedrückt und der gebildete Strang in einem Wasserbad zu amorphem Material abgeschreckt und danach granuliert. Das Granulat wird bei 110°C bei vermindertem Druck (um 5 mbar) über 20 Stunden getrocknet, wobei es kristallisiert. Die inhärente Viskosität, gemessen an einer 0,1%igen Lösung in Chloroform bei 25°C beträgt 1,58 dl/g. Das getrocknete Granulat wird in einer Spritzgießmaschine bei 205°C aufgeschmolzen und die Schmelze in einer auf 25°C gekühlten Form zu amorphen Bechern verarbeitet. Die konischen Becher haben eine Öffnung von 58 mm Durchmesser, einen Boden von 45 mm Durchmesser, eine Höhe von 5 mm und eine Wandstärke von 1,6 mm.

Die Becher dienen als Vorformlinge in einem Streckblasversuch. Sie werden mit ihrer Öffnung in eine gasdruckdichte Vorrichtung eingespannt und mit dieser Vorrichtung in einem Umlufttrockenschrank zwei Minuten lang auf 98-100°C erwärmt. Anschließend werden sie mit einer Druckluftversorgung verbunden und mit einem Druck von etwa 0,8 bar aufgeblasen. Dabei zeigt es sich, daß sich in der Becherwand Blasen von 1 bis 3 cm Größe bilden, die zerplatzen, während der Rest des Bechers nahezu unverstreckt bleibt.

Auch nach Variation von Temperatur und Blasdruck werden keine besseren Ergebnisse erhalten.

### Beispiel

Aus Octandial-1,6, Molmasse 142,2 g/Mol, Siedetemperatur 97°C bei 4 mbar, wird durch Addition von Blausäure das Dicyanhydrin 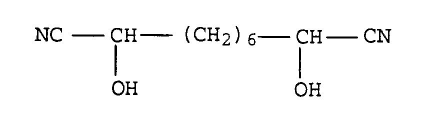
hergestellt. Durch Verseifung wird die entsprechende α,ω-Dihydroxidicarbonsäure enthalten, die mit einem 10 molaren Überschuß an L-Milchsäure gemischt und mit n-Octanol verestert wird. Nach Zugabe von 0,1 % Titantetrabutylat als Umesterungskatalysator wird der Octylester auf 240°C erhitzt und unter Rühren n-Octanol abdestilliert.

Der Rückstand besteht im wesentlichen aus L-Lactid, das ca. 10 mol.-% der Verbindung 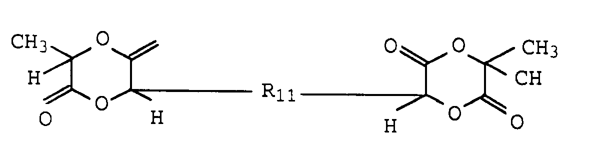
mit R₁₁ = -(CH₂)₆-
enthält.

Man verfährt nun, wie im Vergleichsversuch beschrieben, mit dem Unterschied, daß pro Mol L-Lactid 0,008 Mol des Verzweigers zugesetzt werden. Es wird Poly-L-Lactid mit einer inhärenten Viskosität von 1,55 [dl/g] erhalten, das zu den beschriebenen Bechern verarbeitet wird.

Nach dem Erwärmen auf 98-100°C werden die Becher mit einem Druck von etwa 0,8 bar aufgeblasen, wobei sie, ohne zu zerplatzen, sich zu nahzu kugelförmigen Gebilden mit 8 bis 20 cm Durchmesser und einer Wandstärke von etwa 0,1 mm verformen.

## Patentansprüche

1. Polylactidhomo- oder -copolymeres, enthaltend Langkettenverzweigungen.

2. Polyactid nach Anspruch 1, wie es erhalten wird durch ringöffnende Polymerisation der entsprechenden Monomeren in Gegenwart von bezüglich der Polymerisation mehrfunktionell wirkenden Monomeren.

3. Polylactid nach Anspruch 2, erhalten durch Polymerisation in Gegenwart von 0,01 bis 3 mol.-% des mehrfunktionellen Monomeren.

4. Polylactid nach Anspruch 1, enthaltend Einheiten eines bifunktionell verzweigenden Monomeren.

5. Polylactid nach Anspruch 1, enthaltend als verzweigendes Monomeres ein Di-1,3-dioxan-2-on, Di-1,4-dioxan-2-on, Dilactid oder Dilacton.
